# EUROPEAN PATENT SPECIFICATION

(11) **EP 2 855 872 B1**
(45) Date of publication and mention of the grant of the patent: **21.09.2016**
(21) Application number: 13784152.4
(22) Date of filing: 24.04.2013
(51) Int. Cl.: F01P 7/16

(54) **COOLING SYSTEM AND A MOTOR VEHICLE COMPRISING SUCH A COOLING SYSTEM**
KÜHLSYSTEM UND KRAFTFAHRZEUG MIT SOLCH EINEM KÜHLSYSTEM
SYSTÈME DE REFROIDISSEMENT ET VÉHICULE À MOTEUR LE COMPORTANT

(30) Priority: 04.05.2012 SE 1250449
(43) Date of publication of application: 08.04.2015
(73) Proprietor: Scania CV AB, 151 87 Södertälje (SE)
(72) Inventor: HALL, Ola, S-117 67 Stockholm (SE)
(74) Representative: Scania CV AB
(86) International application number: PCT/SE2013/050445
(87) International publication number: WO 2013/165299

(56) References cited:
- EP-A2- 2 037 097
- EP-A2- 2 366 878
- WO-A1-2012/148344
- WO-A1-2012/148344
- DE-A1- 2 923 523
- DE-A1- 2 923 523
- US-A- 3 357 413
- US-A1- 2003 047 150

## Description

### TECHNICAL AREA OF THE INVENTION AND PRIOR ART

The present invention concerns a cooling system according to the preamble of claim 1 for cooling a combustion engine in a motor vehicle. The invention also concerns a motor vehicle equipped with such a cooling system.

A temperature-dependent activating element with a wax body is often used to regulate the temperature of the cooling fluid in the cooling system that cools the combustion engine of a motor vehicle. The thermostat device conducts, in dependence upon the temperature of the cooling fluid, the cooling fluid flowing from the combustion engine to a cooling fluid radiator to be cooled before said cooling fluid is returned to the combustion engine, or directly back to the combustion engine without passing through the cooling fluid radiator. The thermostat device causes a pressure drop in the cooling fluid that passes through the thermostat device. In a cooling circuit in which the thermostat device is arranged upstream from the cooling fluid radiator, the cooling fluid radiator is thereby subjected to a lower pressure load from the cooling fluid flowing through the cooling fluid radiator compared to a corresponding cooling circuit in which the thermostat device is placed downstream from the cooling fluid radiator, which in turn imposes lower demands in terms of the performance of the cooling fluid radiator. In many motor vehicles the thermostat device is consequently coupled into the cooling circuit of the cooling system between the cooling fluid outlet of the combustion engine and the cooling fluid inlet of the cooling fluid radiator. It has been shown to be advantageous to control the thermostat device in dependence upon the temperature of the cooling fluid being conducted into the combustion engine instead of controlling the thermostat device in dependence upon the temperature of the cooling fluid that is leaving the combustion engine. To enable such control without having to change the placement of the thermostat device in the cooling circuit, thermostat devices have been developed that are arranged so as to receive a controlling cooling fluid flow from a pilot line that diverts a portion of the cooling fluid that is flowing toward the cooling fluid inlet of the combustion engine. Cooling systems equipped with a thermostat device of the latter type are previously known from EP 2 037 097 A2 and EP 2 366 878 A2.

DE 29 23 523 A1 discloses a thermostatic control valve intended for maintaining a constant combustion engine coolant temperature. The valve comprises an expansion element preventing coolant circulation through the engine jacket during heat-up and thereafter operating a by-pass valve dividing coolant flow between radiator and by-pass.

The cooling fluid flowing through the cooling fluid radiator is cooled by means of air that is blown against the cooling fluid radiator by the travel wind when the motor vehicle is in motion. In connection with a need for greater cooling effect, for instance in connection with heavy engine load and high ambient temperatures, a fan can be activated to generate a more powerful airflow through the cooling fluid radiator. Powering the fan entails increased fuel consumption and, with regard to fuel economy, it is consequently desirable to be able to achieve, to the greatest possible extent, the required cooling effect in the cooling fluid radiator without the assistance of the fan.

The temperature-dependent activating element in a conventional thermostat device is designed so as to influence the thermostat device to open when the wax body is heated to a certain temperature, the so-called opening temperature. At cooling fluid temperatures below the opening temperature, the thermostat device remains in its closed position and conducts all the cooling fluid directly back to the combustion engine without it passing through the cooling fluid radiator. At cooling fluid temperatures somewhat higher than the opening temperature, the thermostat device is in a partly opened state and conducts a portion of the cooling fluid to the cooling fluid radiator and a portion of the cooling fluid directly back to the combustion engine without it passing through the cooling fluid radiator. At higher cooling fluid temperatures, the thermostat device is in a fully open state and conducts all the cooling fluid to the cooling fluid radiator.

It is desirable to keep the temperature of a combustion engine within a given temperature range, within which the temperature is low enough to avoid damage due to overheating and high enough to achieve good fuel economy. The lubricating oil in the combustion engine attains a high viscosity at low temperatures, which causes increased friction in the combustion engine and thus increased fuel consumption. A high opening temperature for the thermostat device is consequently advantageous from that standpoint. However, one disadvantage of an elevated opening temperature is that it entails that the cooling system fan needs to be activated more often in order for the cooling fluid radiator to be able to deliver the required cooling effect during more severe increases in the engine load. A greater thermal buffer is available at a relatively low opening temperature, as the thermostat device will then open at a relatively early stage, with the result that the cooling fluid radiator is given better possibilities in terms of being able to deliver the required cooling effect during increases in the engine load without the fan needing to be activated. In a conventional thermostat device the choice of opening temperature will constitute a compromise between these two conflicting respective advantages of a high and low opening temperature, with the result that, in certain operating situations involving low engine load and/or low ambient temperature, the combustion engine will be cooled to an unnecessarily low temperature that results in unnecessarily high fuel consumption.

To avoid the aforementioned problem and enable improved regulation of the coolant temperature in a combustion engine, solutions have been developed wherein the thermostat device of the cooling system is designed with a relatively high opening temperature, and wherein the wax body of the thermostat device is, when necessary, e.g. in connection with a suddenly increased engine load, heated by electrical heating means in order to force an earlier opening of the thermostat device before the cooling fluid has had time to be heated to a temperature that corresponds to the opening temperature of the thermostat device. The electrical heating means are therein controlled by an electronic control unit in dependence upon measured operational variables. Thermostat devices of this type are described in, for example, US 2009/0301408 A1 and DE 30 18 682 A1.

### OBJECT OF THE INVENTION

The object of the present invention is to achieve a cooling system of the type specified in the introduction with a new and advantageous design.

### SUMMARY OF THE INVENTION

According to the present invention, said object is achieved by a cooling system exhibiting the features defined in claim 1.

The cooling system according to the invention comprises:
- a cooling circuit for cooling a combustion engine in a motor vehicle by means of a cooling fluid flowing in a cooling circuit,
- a cooling fluid pump for circulating the cooling fluid in the cooling circuit,
- a cooling fluid radiator coupled into the cooling circuit for cooling the cooling fluid, wherein said cooling fluid radiator comprises a cooling fluid inlet that is connected to a cooling fluid outlet of the combustion engine via a first line of the cooling circuit and a cooling fluid outlet that is connected to a cooling fluid inlet of the combustion engine via a second line of the cooling circuit, wherein said first line is connected to said second line via a third line of the cooling circuit, which third line is connected to the second line at a first point in the second line and arranged so as to allow cooling fluid to return to the combustion engine without passing through said cooling fluid radiator,

- a thermostat device coupled into said first line, which thermostat device is arranged so as to regulate the flow of cooling fluid to the cooling fluid radiator and to said third line in dependence upon the temperature of the cooling fluid that is conducted into the thermostat device from a pilot line included in the cooling circuit, which pilot line is connected at its upstream end to said second line at a second point located between said first point and the cooling fluid inlet of the combustion engine, and
- a heat exchanger that is coupled into the pilot line upstream from the thermostat device, wherein said heat exchanger is arranged so as to enable the exchange of heat between the cooling fluid flowing through the pilot line and any of the following media:
   A) cooling fluid flowing through a conducting portion of said second line that is located upstream from said first point, or
   B) charge air flowing through an air intake to the combustion engine downstream from a compressor disposed in the air intake line, or
   C) ambient air that has passed through the cooling fluid radiator (6) which comes into heat-transferring contact with a cooling coil (57) so as to allow the transfer of heat from the cooling fluid flowing through the cooling coil (57) to said ambient air.

The solution according to the invention makes it possible, by means of a heat exchange with any of the foregoing media A-C, to achieve an advantageous effect on the temperature of the cooling fluid in the pilot line in an operating situation involving low engine load and/or low ambient temperature, so that the degree of opening of the thermostat device will be less than would have been the case without such a heat exchange, since the thermostat device can, by means of the heat exchange, be given the impression that the cooling fluid being conducted into the combustion engine is cooler than it actually is. This reduced degree of opening of the thermostat device results in a somewhat increased temperature of the cooling fluid that is conducted into the combustion engine, which in turn produces a somewhat hotter combustion engine and thus reduced fuel consumption. The temperature of said media A-C increases with increasing engine load and increasing ambient temperature, which in turn means that it becomes possible, in an operating situation involving a high engine load and/or high ambient temperature, and thus a greater cooling demand, to prevent the relevant heat exchange from giving the thermostat device the impression that the cooling fluid being conducted into the combustion engine is cooler than it actually is. The need to activate the cooling system fan in operating situations involving an increased demand for cooling effect can be kept at a low level. The solution according to the invention functions fully automatically and requires no electrical heating means or any control electronics to enable achievement of the desired adaptation of the cooling fluid temperature. The solution according to the invention is thus particularly simple and reliable, and can also be implemented at low cost.

Other advantageous features of the cooling system according to the invention are presented in the non-independent claims and in the description that follows below.

The invention also concerns a motor vehicle exhibiting the features defined in claim 8.

### BRIEF DESCRIPTION OF THE DRAWINGS

The invention will be described in greater detail below with the help of embodiments and with reference to the accompanying drawings. The drawings comprise:
- Fig. 1: a schematic diagram of a cooling system according to a first embodiment of the present invention,
- Fig. 2: a schematic diagram of a cooling system according to a second embodiment of the invention,
- Fig. 3: a schematic diagram of a cooling system according to an example being not part of the invention,
- Fig. 4: a schematic diagram of a cooling section according to a third embodiment of the invention, and
- Fig. 5: a section through a thermostat device that is suitable for inclusion in the cooling systems according to Figs. 1-4.

### DETAILED DESCRIPTION OF EMBODIMENTS OF THE INVENTION

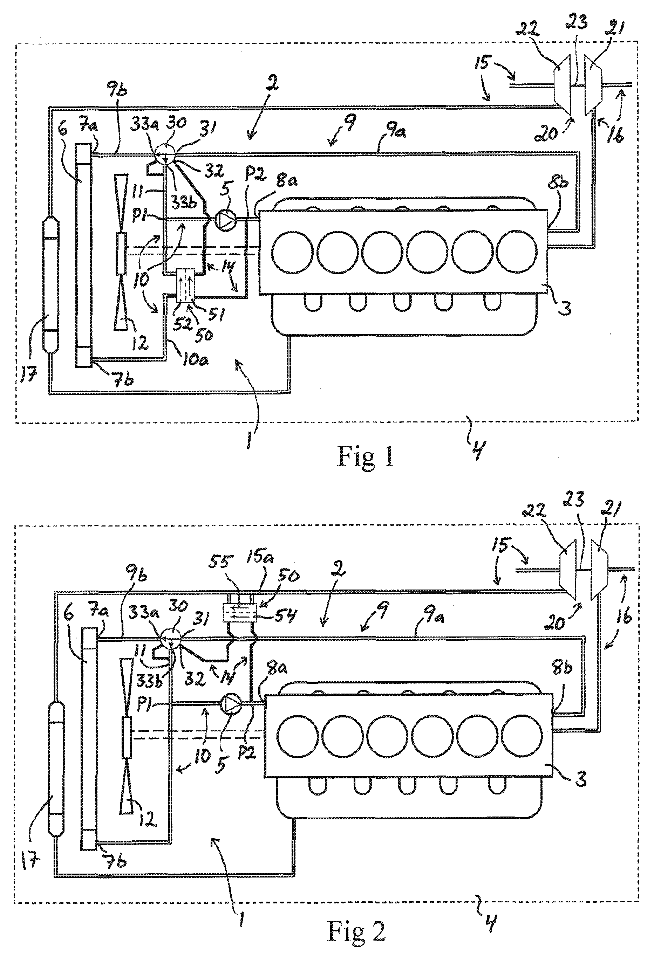

Figs. 1-2 and 4 illustrate cooling systems 1 according to three different embodiments of the present invention. The respective cooling systems 1 comprise a cooling circuit 2 for cooling a combustion engine 3 in a motor vehicle 4 by means of a cooling fluid flowing in the cooling circuit, preferably in the form of water with optional freezing point-lowering additives such as, for example, glycol. A cooling fluid pump 5 is coupled into the cooling circuit 2 to circulate the cooling fluid in the cooling circuit. In addition, a cooling fluid radiator 6 is coupled into the cooling circuit 2 to cool said cooling fluid. Said cooling fluid radiator 6 comprises a cooling fluid inlet 7a that is connected to a cooling fluid outlet 8b of the combustion engine 3 via a first line 9 of the cooling circuit, and a cooling fluid outlet 7b that is that is connected to a cooling fluid inlet 8a of the combustion engine 3 via a second 10 of the cooling circuit. Said first line 9 is connected to said second line 10 via a third line 11 of the cooling circuit. Said third line 11 is connected to said second line 10 at a first point P1 and arranged so as to allow cooling fluid to be returned from the cooling fluid outlet 8b of the combustion engine to the cooling fluid inlet 8a of the combustion engine without the cooling fluid passing through said cooling fluid radiator 6. Said third line 11 thus constitutes a bypass line, through which the cooling fluid circulating in the cooling circuit 2 can bypass the cooling fluid radiator 6 during its passage between the cooling fluid outlet 8b and the cooling fluid inlet 8a of the combustion engine 3. The cooling fluid is circulated between the cooling fluid inlet 8a and the cooling fluid outlet 8b of the combustion engine through cooling fluid ducts inside the combustion engine while absorbing heat from the combustion engine.

The cooling fluid flowing through the cooling fluid radiator 6 is cooled by means of air that is blown against the cooling fluid radiator by the travel wind when the motor vehicle is in motion. The cooling system 1 also comprises a fan 12 that is arranged so as to generate an airflow through the cooling fluid radiator 6 as needed. Said fan 12 can be arranged so as to be powered by an electrical motor or connected to the combustion engine 3 to be powered thereby.

A thermostat device 30 is coupled into the first line 9. Said thermostat device 30 is arranged so as to regulate the flow of cooling fluid to the cooling fluid radiator 6 and to said third line 11 in dependence upon the temperature of the cooling fluid that is conducted into the thermostat device 30 from a pilot line 14 included in the cooling circuit, which pilot line 14 is connected at its upstream end to said second line 10 at a second point P2 located between said first point P1 and the cooling fluid inlet 8a of the combustion engine 3. The inlet of the pilot line 14, whose position is defined by said second point P2, is suitably located between the cooling fluid pump 5 and the cooling fluid inlet 8a of the combustion engine, i.e. downstream from the cooling fluid pump 5. A smaller portion of the cooling fluid that is supplied to the cooling fluid inlet 8a of the combustion engine is diverted to the pilot line 14 from the second line 10 and conducted by the pilot line 14 to the thermostat device 30. In the thermostat device 30, the cooling fluid received from the pilot line 14 is brought into heat-transferring contact with a temperature-dependent activating element and then conducted back to the second line 10 via the third line 11.

The thermostat device 30 comprises:
- a first inlet 31 that is connected to the fluid outlet 8b of the combustion engine via a first conducting portion 9a of the first line 9,
- a second inlet 32 that is connected to the pilot line 14,
- a first outlet 33a that is connected to the cooling fluid inlet 7a of the cooling fluid radiator via a second conducting portion 9b of the first line 9, and
- a second outlet 33b that is connected to the third line 11.

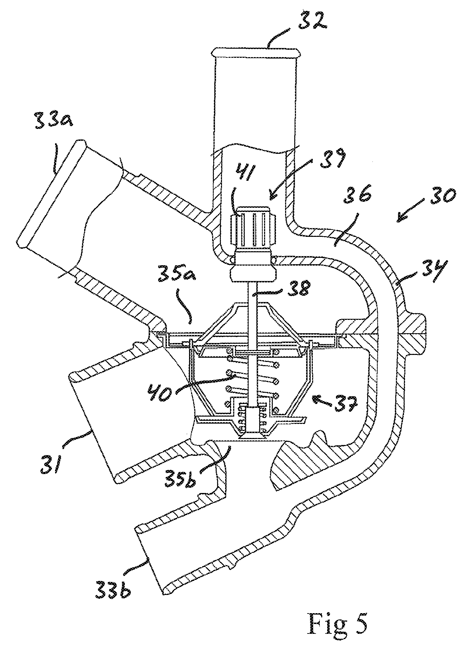

The aforementioned thermostat device 30 can, for example, be of the type illustrated in Fig. 5. Said thermostat device 30 comprises a thermostat housing 34, in which aforementioned inlets 31, 32 and outlets 33a, 33b are disposed. The first inlet 31 is connected via a first flow passage 35a to the first outlet 33a and via a second flow passage 35b to the second outlet 33b. The second inlet 32 is connected to the second outlet 33b via a connecting duct 36 arranged in the thermostat housing 34.

A valve body 37 is displaceably arranged in the thermostat housing 34. Said valve body 37 is axially displaceable between different positions for regulating the flow of cooling fluid from the first inlet 31 to the first and second outlets 33a, 33b. The valve body 37 is secured to and jointly displaceable with an axially displaceable valve rod 38. The valve body 37 is displaceable to and fro between a first end position, which is illustrated in Fig 5, and a second end position. In the second end position, the valve body 37 is arranged so as to keep the flow passage 35a closed and the second flow passage 35b open, whereupon cooling fluid is thus prevented from flowing from the first inlet 31 to the first outlet 33a, but allowed to flow from the first inlet 31 to the second outlet 33b. Said first end position of the valve body 37 represents a closed state of the thermostat device 30. In the second end position, the valve body 37 is arranged so as to keep the first flow passage 35a open and the second flow passage 35b closed, whereupon cooling fluid is thus allowed to flow from the first inlet 31 to the first outlet 33a, but prevented from flowing from the first inlet 31 to the second outlet 33b. Said second end position of the valve body 37 represents a fully open state of the thermostat device 30. When the valve body 37 is situated at a position between said end positions, cooling fluid is allowed to flow from the inlet 31 in varying degrees to both the first outlet 33a via the first flow passage 35a and to the second outlet 33b via the second flow passage 35b. The latter position of the valve body 37 represents a partially open state of the thermostat device 30. The cooling fluid received from the pilot line 14 is always allowed to flow on to the second outlet 33b via the connecting duct 36, regardless of the position of the valve body 37.

The valve body 37 is displaceable from said first end position in the direction of said second end position under the action of an activating element 39 that is arranged in the connecting duct 36, and against the action of the spring force of a spring element 40 acting on the valve body 37. The activating element 39 is arranged so as to influence the displacement position of the valve rod 38 and the valve body 37 in dependence upon the temperature of the cooling fluid that is received from the pilot line 14 via the second inlet 32. The temperature-dependent activating element 39 comprises an outer sleeve 41 and a wax body (not shown) that is arranged in an internal space in the sleeve. The valve rod 38 is connected to a piston (not shown) that is displaceably received in said internal space in the sleeve 41. The wax body is arranged so as to act upon the piston. When the cooling fluid flowing through the connecting duct 36 has a temperature that is lower than the melting temperature of the wax substance in the wax body, the wax body is in a solid state, and the valve body 37 is then located in the first end position illustrated in Fig. 5. When the wax body is heated to said melting temperature by the action of heat from cooling fluid flowing through the connecting duct 36, the wax body begins to melt. As the wax body melts it increases in volume and thereby exerts pressure force on the piston so that it is displaced jointly with the valve rod 38 and the valve body 37 against the action of the spring element 40. The valve body 37 is thereby displaced from aforesaid first end position in the direction of aforesaid second end position. When essentially the entire wax body has melted, the valve body 37 reaches the second end position. When the wax body then, due to a lower temperature of the cooling fluid flowing through the connecting duct 36, has cooled to a temperature below said melting temperature, the wax body begins to stiffen. As the wax body stiffens it decreases in volume, whereupon the piston together with the valve rod 38 and the valve body 37 is displaced in the opposite direction under the action of the spring element 40.

When the temperature of the cooling fluid in the pilot line 14 is low, the wax body remains in its solid state and the valve body 37 is kept in the aforesaid first end position, whereupon all of the cooling fluid that flows via the first line 9 from the combustion engine 3 to the thermostat device 30 is returned to the combustion engine 3 via the third line 11 and the second line 10 without passing through the cooling fluid radiator 6. When the cooling fluid in the pilot line 14 has become hot enough that the wax body begins to melt, the valve body 37 will assume a position between the aforesaid first and second end positions, whereupon a certain amount of the cooling fluid that flows via the first line 9 from the combustion engine 3 to the thermostat device 30 will be conducted on to the cooling fluid radiator 6 and cooled therein before the cooling fluid is returned via the second line 10 to the combustion engine, while the remaining amount of said cooling fluid will be returned to the combustion engine 3 via the third line 11 and the second line 10 without passing through the cooling fluid radiator 6. When essentially the entire wax body has melted, the valve body 37 assumes aforesaid second end position, whereupon all the cooling fluid flowing via the first line 9 from the combustion engine 3 to the thermostat device 30 will be led on to the cooling fluid radiator 6 and cooled therein before the cooling fluid is returned via the second line 10 to the combustion engine 3.

In the example described above, the thermostat device comprises a valve body and an activating element. The cooling system 1 according to the invention could alternatively comprise a thermostat device wherein the flow between the first inlet 31 and the first outlet 33a is regulated by means of a first valve body, and wherein the flow between the first inlet 31 and the second outlet 33b is regulated by means of a second valve body, wherein said two valve bodies are allocated each their own temperature-dependent activating element, which is arranged so as to influence the displacement position of the associated valve body in dependence upon the temperature of the cooling fluid that is being received from the pilot line 14 via the second inlet 32.

In the examples illustrated in Figs. 1-4, the motor vehicle 4 is equipped with a turbo unit 20. Air is supplied to the combustion engine 3 via an air intake line 15, and exhaust gases are conducted away from the combustion engine via an exhaust gas line 16. The turbo unit 20 comprises a turbine 21 with a turbine wheel that is arranged in the exhaust line 16 so as to be driven in rotation by the exhaust gas flow from the combustion engine 3. The turbo unit 20 further comprises a compressor 22 with a compressor wheel that is arranged in the air intake line 15 to compress the air that is supplied to the combustion engine 3 and thereby build up desired charge pressure. The compressor wheel and the turbine wheel are operationally connected to one another, for example by being disposed on the same shaft 23, so that the compressor wheel is driven in rotation by the turbine wheel. A charge air cooler 17 is arranged in the air intake line 15 between the compressor 22 and the combustion engine 3.

The cooling system 1 comprises a heat exchanger 50 that is coupled into the pilot line 14 upstream from the thermostat device 30. Said heat exchanger 50 is arranged so as to allow heat exchange between the cooling fluid flowing through the pilot line 14 and a medium whose temperature is influenced by the ambient temperature and the combustion engine load.

In the embodiment illustrated in Fig. 1, the heat exchanger 50 is arranged so as to allow heat exchange between the cooling fluid flowing through the pilot line 14 and cooling fluid flowing through a conducting portion 10a of said second line 10 that is located upstream from said first point P1, i.e. cooling fluid flowing between cooling fluid outlet 7b of the cooling fluid radiator and said first point P1. In this case the heat exchanger 50 comprises a first through-flow circuit 51 that is coupled into the pilot line 14 upstream from the thermostat device 30 and a second through-flow circuit 52 that is coupled into said second line 10 upstream from said first point P1. The second through-flow circuit 52 is arranged in a heat-transferring relationship with the first through-flow circuit 51 to allow heat exchange between cooling fluid flowing through the first through-flow circuit 51 and cooling fluid flowing through the second through-flow circuit 52. The two through-flow circuits 51, 52 are suitably connected in a parallel flow configuration, but can alternatively be connected in a counterflow configuration. The first and second through-flow circuits 51, 52 respectively constitute the primary circuit and secondary circuit of the heat exchanger. In this embodiment, cooling fluid that has passed through and been cooled in the cooling fluid radiator and has not been mixed with any cooling fluid flowing through the third line 11 will flow through the second through-flow circuit 52 when the thermostat device is in its partly or fully open state.

When the thermostat device 30 is in its fully closed state, no cooling fluid will flow through the second through-flow circuit of the heat exchanger 52, whereupon the temperature of the cooling fluid flowing through the pilot line 14 will thus not be affected when said cooling fluid passes through the heat exchanger 50. When the engine load is low and/or the ambient temperature is low and the thermostat device 30 is in its partly open state, the cooling fluid flowing out of the cooling fluid radiator 6 will be notably cooler than the cooling fluid that is conducted through the third line 11, whereupon the cooling fluid flowing through the pilot line 14 will thus be cooled during its passage through the heat exchanger 50. In this case the activating element 39 of the thermostat device will thus be affected by a pilot flow that has a lower temperature than the cooling fluid flowing into the combustion engine 3, and the thermostat device will thus be given the impression that the cooling fluid flowing into the combustion engine is cooler than it actually is, which in turn means that the thermostat device 30 in the relevant cooling system 1 will, under these operating conditions, conduct a greater amount of cooling fluid to the third line 11 and thereby maintain a higher cooling fluid temperature than a corresponding radiator system without a heat exchanger in the pilot line.

When the engine load is high and the thermostat device 30 is in its fully open state, the cooling fluid flowing out of the cooling fluid radiator 6 has essentially the same temperature as the cooling fluid flowing through the pilot line 14, whereupon the temperature of the cooling fluid flowing through the pilot line 14 will thus remain essentially unaffected when said cooling fluid passes through the heat exchanger 50.

The heat exchanger 50 in the embodiment illustrated in Fig. 2 is arranged so as to allow heat exchange between the cooling fluid flowing through the pilot line 14 and charge air flowing through the combustion engine air intake line 15 downstream from the compressor 22, preferably in a conducting portion 15a between the compressor 22 and the charge air cooler 17. In this case the heat exchanger 50 comprises a first through-flow circuit 54 that is coupled into the pilot line 14 upstream from the thermostat device 30 and a second through-flow circuit 55 that is coupled into the air intake line 15 downstream from the compressor 22. The second through-flow circuit 55 is arranged in a heat-exchanging relationship with said first through-flow circuit 54 to allow heat exchange between cooling fluid flowing through the first through-flow circuit 54 and charge air flowing through the second through-flow circuit 55. The two through-flow circuits 54, 55 are suitably connected in a parallel flow configuration, but can alternatively be connected in a counterflow configuration.

The temperature of the charge air increases with increasing pressure. Because the pressure of the charge air increases with increasing engine load, the temperature of the charge air downstream from the compressor 22 will thus increase with increasing engine load as well. The temperature of the charge air also increases with increasing ambient temperature.

When the engine load is low, the charge air flowing through the air intake line 15 downstream from the compressor 22 will have a lower temperature than the cooling fluid that is conducted into the pilot line 14, whereupon the cooling fluid flowing through the pilot line 14 will be cooled during its passage through the heat exchanger 50. In this case the activating element 39 of the thermostat device will be affected by a pilot flow that has a lower temperature than the cooling fluid flowing into the combustion engine 3, and the thermostat device 30 will thus be given the impression that the cooling flowing into the combustion engine is cooler than it actually is, which in turn has the result that the thermostat device 30 of the relevant cooling system 1 will, under these operating conditions, conduct a greater quantity of cooling fluid to the third line 11 and thereby maintain a higher cooling fluid temperature when the thermostat device 30 is in its partially open state than a corresponding cooling system without a heat exchanger in the pilot line.

When the engine load is high, the charge air flowing through the air intake line 15 downstream from the compressor 22 will have a higher temperature than the cooling fluid that is conducted into the pilot line 14, whereupon the cooling fluid flowing through the pilot line 14 will thus be heated during its passage through the heat exchanger 50. In this case the activating element 39 of the thermostat device will be affected by a pilot flow that has a higher temperature than the cooling fluid flowing into the combustion engine 3, and the thermostat device 30 will thus be given the impression that the cooling fluid flowing into the combustion engine is hotter than it actually is.

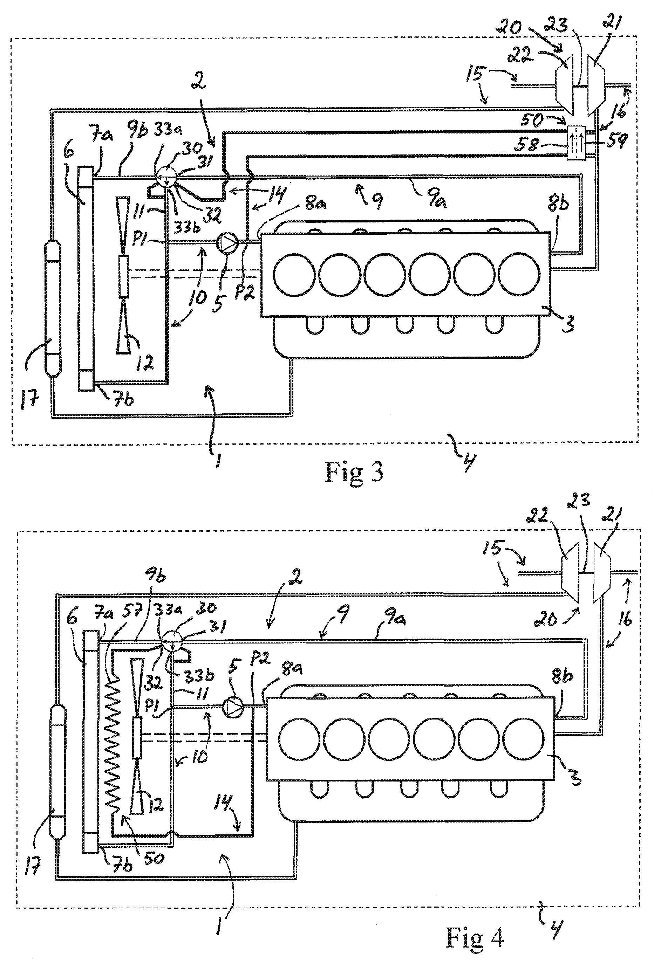

The heat exchanger 50 in the example being not part of the invention illustrated in Fig. 3 is arranged so as to allow heat exchange between the cooling fluid flowing through the pilot line 14 and exhaust gases flowing through the exhaust gas line 16 of the combustion engine. In this case the heat exchanger 50 comprises a first through-flow circuit 58 that is coupled into the pilot line 14 upstream from the thermostat device 30 and a second through-flow circuit 59 that is coupled into the exhaust gas line 16. The second through-flow circuit 59 is arranged in a heat-exchanging relationship with the first through-flow circuit 58 to allow heat exchange between cooling fluid flowing through the first through-flow circuit 58 and exhaust gases flowing through the second through-flow circuit 59. The two through-flow circuits 58, 59 are suitably connected in a parallel flow configuration, but can alternatively be connected in a counterflow configuration.

The temperature of the exhaust gases from the combustion engine 3 increase strongly with increasing engine load, and also increases to some extent with increasing ambient temperature. The cooling fluid flowing through the pilot line 14 will thus be heated less during its passage through the heat exchanger 50 when the engine load is high. In an operating situation involving low engine load, the activating element 39 of the thermostat device in the cooling system 1 according to Fig. 3 can, by means of suitable adaptation of the opening temperature of the thermostat device 39, be caused to conduct a greater quantity of cooling fluid to the third line 11 and thereby maintain a higher cooling fluid temperature when the thermostat device 30 is in its partially open state than a corresponding cooling system without a heat exchanger in the pilot line.

The heat exchanger 50 in the embodiment shown in Fig. 4 is arranged so as to allow heat exchange between the cooling fluid flowing through the pilot line 14 and ambient air that has passed through the cooling fluid radiator 6. In this case the heat exchanger 50 comprises a cooling coil 57 that is coupled into the pilot line 14 upstream from the thermostat device 30. Said cooling coil 57 is disposed behind the cooling fluid radiator 6 in a position such that ambient air that has passed through the cooling fluid radiator 6 comes into heat-transferring contact with the cooling coil 57 to allow the transfer of heat from the cooling fluid flowing through the cooling coil 57 to said ambient air. When the temperature of the cooling fluid flowing out of the combustion engine 3 is so low that the thermostat device 30 remains in its fully closed state, no cooling fluid will flow through the cooling fluid radiator 6, whereupon the cooling fluid flowing through the cooling coil 57 will be affected by an air flow that has a temperature that essentially corresponds to the ambient temperature. In this case the cooling fluid flowing through the pilot line 14 is thus exposed to a relatively major cooling effect during its passage through the heat exchanger 50.

When the engine load is low and the thermostat device 30 is in its partially open state, the ambient air passing through the cooling fluid radiator 6 will be heated to some extent by the cooling fluid flowing through the cooling fluid radiator, whereupon the cooling fluid flowing through the cooling coil 57 will be affected by an air flow that has a temperature that is somewhat higher than the ambient temperature. In this case the cooling fluid flowing through the pilot line 14 will thus be exposed to a somewhat lower cooling effect during its passage through the heat exchanger 50.

When the engine load is high and the thermostat device 30 is in its fully open state, the ambient air passing through the cooling fluid radiator 6 will be heated to a relatively great extent by the cooling fluid flowing through the cooling fluid radiator, whereupon the cooling fluid flowing through the cooling coil 57 will be affected by an air flow that has a temperature that is notably higher than the ambient temperature. In this case the cooling fluid flowing through the pilot line 14 will be exposed to an even lower cooling effect during its passage through the heat exchanger 50.

In the embodiment illustrated in Fig. 4, the cooling fluid flowing through the pilot line 14 will thus be exposed during its passage through the heat exchanger 50 to a cooling effect that decreases with increasing engine load and also decreases with increasing ambient temperature.

The cooling system according to the invention is intended in particular for use in a heavy motor vehicle, such as a bus, a tractor or a goods vehicle.

The invention is naturally in no way limited to the embodiments described above, but rather numerous possible modifications thereof will be obvious to one skilled in the art, without deviating from the basic concept of the invention as defined in the accompanying claims.

## Claims

1. A cooling system for a motor vehicle comprising:
- a cooling circuit (2) for cooling a combustion engine (3) in a motor vehicle by means of a cooling fluid flowing in the cooling circuit,
- a cooling fluid pump (5) for circulating the cooling fluid in the cooling circuit (2),
- a cooling fluid radiator (6) coupled into the cooling circuit (2) for cooling the cooling fluid, wherein said cooling fluid radiator (6) comprises a cooling fluid inlet (7a) that is connected to a cooling fluid outlet (8b) of the combustion engine (3) via a first line (9) of the cooling circuit and a cooling fluid outlet (7b) that is connected to a cooling fluid inlet (8a) of the combustion engine (3) via a second line (10) of the cooling circuit, wherein said first line (9) is connected to said second line (10) via a third line (11) of the cooling circuit, which third line (11) is connected to the second line (10) at a first point (P1) in the second line and arranged so as to allow cooling fluid to return to the combustion engine (3) without passing through said cooling fluid radiator (6), and
- a thermostat device (30) coupled into said first line (9), which thermostat device (30) is arranged so as to regulate the flow of cooling fluid to the cooling fluid radiator (6) and to said third line (11) in dependence upon the temperature of cooling fluid that is conducted into the thermostat device (30) from a pilot line (14) included in the cooling circuit, which pilot line (14) is connected at its upstream end to said second line (10) at a second point (P2) located between said first point (P1) and the cooling fluid inlet (8a) of the combustion engine (3), **characterized in that** the cooling system (1) comprises a heat exchanger (50) that is coupled into the pilot line (14) upstream from the thermostat device (30), wherein said heat exchanger (50) is arranged so as to allow heat exchange between the cooling fluid flowing through the pilot line (14) and any of the following media:
A) cooling fluid flowing through a conducting portion (10a) of said second line (10) that is located upstream from said first point (P1), or
B) charge air flowing through an air intake line (15) to the combustion engine (3) downstream from a compressor (22) arranged in said air intake line, or
C) ambient air that has passed through the cooling fluid radiator (6) which comes into heat-transferring contact with a cooling coil (57) so as to allow the transfer of heat from the cooling fluid flowing through the cooling coil (57) to said ambient air.

2. A cooling system according to claim 1, **characterized in that** the heat exchanger (50) comprises:
- a first through-flow circuit (51) that is coupled into the pilot line (14) upstream from the thermostat device (30), and
- a second through-flow circuit (52) that is coupled into said second line (10) upstream from said first point (P1) and that is arranged in a heat-transferring relationship with the first through-flow circuit (51) to allow heat exchange between cooling fluid flowing through the through-flow circuit (51) and cooling fluid flowing through the second through-flow circuit (52).

3. A cooling system according to claim 1, **characterized in that** the heat exchanger (50) comprises:
- a first through-flow circuit (54) that is coupled into the pilot line (14) upstream from the thermostat device (30), and
- a second through-flow circuit (55) that is coupled into said air intake line (15) downstream from said compressor (22) and that is arranged in a heat-transferring relationship to the first through-flow circuit (54) to allow heat exchange between cooling fluid flowing through the first through-flow circuit (54) and charge air flowing through the second through-flow circuit (55).

4. A cooling system according to claim 3, **characterized in that** the second through-flow circuit (55) is coupled into said air intake line (15) between said compressor (22) and a charge air cooler disposed in the air intake line (17).

5. A cooling system according to any of claims 2-5, **characterized in that** the two through-flow circuits (51, 52; 54, 55; 58, 59) are coupled in a parallel flow configuration.

6. A cooling system according to claim 1, **characterized in that** the heat exchanger (50) comprises a cooling coil (57) disposed behind the cooling fluid radiator (6) that is coupled into the pilot line (14) upstream from the thermostat device (30).

7. A cooling system according to any of claims 1-7, **characterized in that** the cooling fluid pump (5) is coupled into said second line (10) between said first point (P1) and said second point (P2).

8. A motor vehicle containing a combustion engine (3), **characterized in that** the motor vehicle (4) contains a cooling system (1) according to any of claims 1-8 for cooling the combustion engine (3).

## Patentansprüche

1. Kühlsystem für ein Kraftfahrzeug umfassend:
- einen Kühlkreislauf (2) zum Kühlen eines Verbrennungsmotors (3) in einem Kraftfahrzeug mittels einer in dem Kühlkreislauf fließenden Kühlflüssigkeit,
- eine Kühlflüssigkeitspumpe (5) zum Zirkulieren der Kühlflüssigkeit in dem Kühlkreislauf (2),
- einen in den Kühlkreislauf (2) eingekoppelten Kühlflüssigkeitskühler (6) zum Kühlen der Kühlflüssigkeit, wobei der Kühlflüssigkeitskühler (6) einen Kühlflüssigkeitseinlass (7a), der mit einem Kühlflüssigkeitsauslass (8b) des Verbrennungsmotors (3) über eine erste Leitung (9) des Kühlkreislaufes verbunden ist, und einen Kühlflüssigkeitsauslass (7b) umfasst, der mit einem Kühlflüssigkeitseinlass (8a) des Verbrennungsmotors (3) über eine zweite Leitung (10) des Kühlkreislaufes verbunden ist, wobei die erste Leitung (9) mit der zweiten Leitung (10) über eine dritte Leitung (11) des Kühlkreislaufes verbunden ist, wobei die dritte Leitung (11) mit der zweiten Leitung (10) an einem ersten Punkt (P1) in der zweiten Leitung verbunden ist und dazu angeordnet ist, um der Kühlflüssigkeit zu ermöglichen, zu dem Verbrennungsmotor (3) zurückzukehren ohne den Kühlflüssigkeitskühler (6) zu durchlaufen, und
- eine in die erste Leitung (9) eingekoppelte Thermostateinrichtung (30), wobei die Thermostateinrichtung (30) dazu angeordnet ist, um den Kühlflüssigkeitsfluss zu dem Kühlflüssigkeitskühler (6) und zu der dritten Leitung (11) in Abhängigkeit der Temperatur der Kühlflüssigkeit zu regulieren, die in die Thermostateinrichtung (30) von einer in dem Kühlkreislauf enthaltenen Steuerleitung (14) geführt wird, wobei die Steuerleitung (14) an ihrem stromaufwärts befindlichen Ende mit der zweiten Leitung (10) an einem zweiten Punkt (P2) verbunden ist, der sich zwischen dem ersten Punkt (P1) und dem Kühlflüssigkeitseinlauf (8a) des Verbrennungsmotors (3) befindet,
**dadurch gekennzeichnet, dass** das Kühlsystem (1) einen Wärmeübertrager (50) umfasst, der stromaufwärts der Thermostateinrichtung (30) in die Steuerleitung (14) eingekoppelt ist, wobei der Wärmeübertrager (50) dazu angeordnet ist, um einen Wärmeaustausch zwischen der durch die Steuerleitung (14) fließende Kühlflüssigkeit und einem der folgenden Medien zu ermöglichen:
A) Kühlflüssigkeit, die durch einen leitenden Abschnitt (10a) einer zweiten Leitung (10) fließt, der sich stromaufwärts des ersten Punkts (P1) befindet, oder
B) Ladeluft, die durch eine Luftansaugleitung (15) zu dem Verbrennungsmotor (3) stromabwärts eines Kompressors (22) fließt, der in der Luftansaugleitung angeordnet ist, oder
C) Umgebungsluft, die den Kühlflüssigkeitskühler (6) durchlaufen hat, die in Wärmeübertragungskontakt mit einer Kühlspule (57) kommt, um die Wärmeübertragung von der durch die Kühlspule (57) fließenden Kühlflüssigkeit zu der Umgebungsluft zu ermöglichen.

2. Kühlsystem nach Anspruch 1, **dadurch gekennzeichnet, dass** der Wärmeübertrager (50) umfasst:
- einen ersten Durchflusskreis (51) der in die Steuerleitung (14) stromaufwärts von der Thermostateinrichtung (30) eingekoppelt ist, und
- einen zweiten Durchflusskreis (52), der in die zweite Leitung (10) stromaufwärts des ersten Punkts (P1) eingekoppelt ist und in einem Wärmeübertragungsverhältnisses mit dem ersten Durchflusskreis (51) steht, um eine Wärmeübertragung zwischen einer durch den ersten Durchflusskreislauf (51) fließenden Kühlflüssigkeit und einer durch den zweiten Durchflusskreislauf (52) fließenden Kühlflüssigkeit zu ermöglichen.

3. Kühlsystem nach Anspruch 1, **dadurch gekennzeichnet, dass** der Wärmeübertrager (50) umfasst:
- einen ersten Durchflusskreislauf (54), der in die Steuerleitung (14) stromaufwärts der Thermostateinrichtung (30) eingekoppelt ist, und
- einen zweiten Durchflusskreislauf (55), der in die Luftansaugleitung (15) stromabwärts des Kompressors (22) eingekoppelt ist und in einem Wärmeübertragungsverhältnis zu dem ersten Durchflusskreislauf (54) angeordnet ist, um einen Wärmeaustausch zwischen einer durch den ersten Durchflusskreislauf (54) fließenden Kühlflüssigkeit und durch den zweiten Durchflusskreislauf (55) fließenden Ladeluft zu ermöglichen.

4. Kühlsystem nach Anspruch 3, **dadurch gekennzeichnet, dass** der zweite Durchflusskreislauf (55) in die Luftansaugleitung (15) zwischen dem Kompressor (22) und einem Ladeluftkühler eingekoppelt ist, der in der Luftansaugleitung (17) angeordnet ist.

5. Kühlsystem nach einem der Ansprüche 2 bis 5, **dadurch gekennzeichnet, dass** die zwei Durchflusskreisläufe (51, 52; 54, 55; 58, 59) in einer parallelen Flusskonfiguration gekoppelt sind.

6. Kühlsystem nach Anspruch 1, **dadurch gekennzeichnet, dass** der Wärmeübertrager (50) eine Kühlspule (57) umfasst, die hinter dem Kühlflüssigkeitskühler (6) angeordnet ist, der in der Steuerleitung (14) stromaufwärts der Thermostateinrichtung (30) eingekoppelt ist.

7. Kühlsystem nach einem der Ansprüche 1 bis 7, **dadurch gekennzeichnet, dass** die Kühlflüssigkeitspumpe (5) in die zweite Leitung (10) zwischen dem ersten Punkt (P1) und dem zweiten Punkt (P2) eingekoppelt ist.

8. Ein Kraftfahrzeug umfassend einen Verbrennungsmotor (3), **dadurch gekennzeichnet, dass** das Kraftfahrzeug (4) ein Kühlsystem (1) nach einem der Ansprüche 1 bis 8 zum Kühlen des Verbrennungsmotors (3) umfasst.

## Revendications

1. Système de refroidissement pour un véhicule à moteur, comprenant :
- un circuit de refroidissement (2) destiné à refroidir un moteur à combustion (3) dans un véhicule à moteur à l'aide d'un fluide de refroidissement s'écoulant dans le circuit de refroidissement,
- une pompe à fluide de refroidissement (5) pour faire circuler le fluide de refroidissement dans le circuit de refroidissement (2),
- un radiateur de fluide de refroidissement (6) couplé dans le circuit de refroidissement (2) pour refroidir le fluide de refroidissement, ledit radiateur de fluide de refroidissement (6) comprenant un orifice d'admission de fluide de refroidissement (7a) qui est relié à un orifice de sortie de fluide de refroidissement (8b) du moteur à combustion (3) par l'intermédiaire d'une première ligne (9) du circuit de refroidissement, et un orifice de sortie de fluide de refroidissement (7b) qui est relié à un orifice d'admission de fluide de refroidissement (8a) du moteur à combustion (3) par l'intermédiaire d'une deuxième ligne (10) du circuit de refroidissement, ladite première ligne (9) étant reliée à ladite deuxième ligne (10) par l'intermédiaire d'une troisième ligne (11) du circuit de refroidissement, cette troisième ligne (11) étant reliée à la deuxième ligne (10) en un premier point (P1) dans la deuxième ligne, et agencée de façon à permettre à un fluide de refroidissement de revenir vers le moteur à combustion (3) sans passer par ledit radiateur de fluide de refroidissement (6), et
- un dispositif de thermostat (30) couplé dans ladite première ligne (9), ce dispositif de thermostat (30) étant agencé de façon à réguler l'écoulement de fluide de refroidissement vers le radiateur de fluide de refroidissement (6) et vers ladite troisième ligne (11) en fonction de la température du fluide de refroidissement qui est acheminé dans le dispositif de thermostat (30) à partir d'une ligne pilote (14) incluse dans le circuit de refroidissement, cette ligne pilote (14) étant reliée, à son extrémité amont, à ladite deuxième ligne (10) en un deuxième point (P2) situé entre ledit premier point (P1) et l'orifice d'admission de fluide de refroidissement (8a) du moteur à combustion (3),
**caractérisé en ce que** le système de refroidissement (1) comprend un échangeur de chaleur (50) qui est couplé dans la ligne pilote (14) en amont du dispositif de thermostat (30), ledit échangeur de chaleur (50) étant agencé de façon à permettre un échange de chaleur entre le fluide de refroidissement s'écoulant à travers la ligne pilote (14) et l'un quelconque des milieux suivants :
A)un fluide de refroidissement s'écoulant à travers une partie de conduction (10a) de ladite deuxième ligne (10) qui est située en amont par rapport audit premier point (P1), ou
B)de l'air de charge s'écoulant à travers une ligne d'admission d'air (15) vers le moteur à combustion (3) en aval d'un compresseur (22) disposé dans ladite ligne d'admission d'air, ou
C)de l'air ambiant qui a traversé le radiateur de fluide de refroidissement (6), qui vient en contact par transfert de chaleur avec un serpentin de refroidissement (57), de façon à permettre le transfert de chaleur du fluide de refroidissement s'écoulant à travers le serpentin de refroidissement (57) audit air ambiant.

2. Système de refroidissement selon la revendication 1, **caractérisé en ce que** l'échangeur de chaleur (50) comprend :
- un premier circuit à écoulement traversant (51), qui est couplé dans la ligne pilote (14) en amont du dispositif de thermostat (30), et
- un deuxième circuit à écoulement traversant (52), qui est couplé dans ladite deuxième ligne (10) en amont dudit premier point (P1), et qui est agencé selon une relation de transfert de chaleur avec le premier circuit à écoulement traversant (51), de façon à permettre un échange de chaleur entre un fluide de refroidissement s'écoulant à travers le circuit à écoulement traversant (51) et un fluide de refroidissement s'écoulant à travers le deuxième circuit à écoulement traversant (52).

3. Système de refroidissement selon la revendication 1, **caractérisé en ce que** l'échangeur de chaleur (50) comprend :
- un premier circuit à écoulement traversant (54), qui est couplé dans la ligne pilote (14) en amont du dispositif de thermostat (30), et
- un deuxième circuit à écoulement traversant (55), qui est couplé dans ladite ligne d'admission d'air (15) en aval dudit compresseur (22), et qui est agencé selon une relation de transfert de chaleur avec le premier circuit à écoulement traversant (54) de façon à permettre un échange de chaleur entre un fluide de refroidissement s'écoulant à travers le premier circuit à écoulement traversant (54) et de l'air de charge s'écoulant à travers le deuxième circuit à écoulement traversant (55).

4. Système de refroidissement selon la revendication 3, **caractérisé en ce que** le deuxième circuit à écoulement traversant (55) est couplé dans ladite ligne d'admission d'air (15) entre ledit compresseur (22) et un refroidisseur d'air de charge disposé dans la ligne d'admission d'air (17).

5. Système de refroidissement selon l'une quelconque des revendications 2 à 5, **caractérisé en ce que** les deux circuits à écoulement traversant (51, 52 ; 54, 55 ; 58, 59) sont couplés selon une configuration à écoulement parallèle.

6. Système de refroidissement selon la revendication 1, **caractérisé en ce que** l'échangeur de chaleur (50) comprend un serpentin de refroidissement (57) disposé derrière le radiateur de fluide de refroidissement (6), celui-ci étant couplé dans la ligne pilote (14) en amont du dispositif de thermostat (30).

7. Système de refroidissement selon l'une quelconque des revendications 1 à 7, **caractérisé en ce que** la pompe à fluide de refroidissement (5) est couplée dans ladite deuxième ligne (10) entre ledit premier point (P1) et ledit deuxième point (P2).

8. Véhicule à moteur contenant un moteur à combustion (3), **caractérisé en ce que** le véhicule à moteur (4) contient un système de refroidissement (1) selon l'une quelconque des revendications 1 à 8 pour refroidir le moteur à combustion (3).
